# DEMANDE DE BREVET EUROPEEN

(11) **EP 1 209 873 A1**
(43) Date de publication de la demande: **29.05.2002**
(21) Numéro de dépôt: 01204329.5
(22) Date de dépôt: 13.11.2001
(51) Int. Cl.: H04L 27/36

(54) **Procédé et apparaeil pour le transmission de signaux modulés en phase et en amplitude**

(30) Priorité: 21.11.2000 FR 0015013
(71) Demandeur: Koninklijke Philips Electronics N.V., 5621 BA Eindhoven (NL)
(72) Inventeur: Chabas, Jean Alain, c/o Société Civile S.P.I.D., 75008 Paris (FR)
(74) Mandataire: Chaffraix, Jean

(57) **Abrégé**

Cet appareil comprend un émetteur de signaux modulés en amplitude et en phase. Cet émetteur est formé d'un amplificateur de type non linéaire (30) pour fournir des signaux à une antenne (10) à partir d'un générateur de signal de porteuse (25). Il comporte un modulateur d'amplitude (39) qui est placé entre l'amplificateur (30) et l'antenne (10) et un modulateur de phase (37) qui est placé au niveau de l'entrée de l'amplificateur (30).

## Description

L'invention concerne un appareil comprenant un émetteur de signaux modulés en amplitude formé d'un amplificateur de type non linéaire, de préférence, pour fournir des signaux à un circuit d'utilisation à partir d'un générateur de signal de porteuse.

L'invention concerne aussi un procédé pour moduler des signaux en phase et en amplitude.

L'invention trouve d'importantes applications dans le domaine des radiocommunications, notamment celles qui correspondent aux normes GSM EDGE. L'utilisation des amplificateurs non linéaires s'impose à cause de leur bon rendement énergétique.

Un appareil de ce genre est décrit dans le document de brevet :
WO-0048309. Dans cet appareil connu, on est confronté aux problèmes de distorsions engendrées par l'amplificateur non linéaire.

La présente invention propose un appareil du genre mentionné dans le préambule, qui permet de s'affranchir dans une large mesure des problèmes de distorsions.

Pour cela, un tel appareil est remarquable en ce que qu'il comporte, au moins, un modulateur d'amplitude qui est muni d'une entrée de modulation d'amplitude pour recevoir une information à transmettre et qui est placé entre ledit amplificateur et ledit circuit d'utilisation.

L'idée de l'invention est qu'en plaçant le modulateur d'amplitude entre l'amplificateur et le circuit d'utilisation, on s'affranchit, dans une large mesure, des non linéarités de l'amplificateur puisque celui-ci travaille sur des signaux d'amplitude constante.

Selon une caractéristique importante de l'invention, l'appareil comporte un circuit de filtrage, situé entre le circuit d'utilisation et ledit amplificateur, permettant d'atténuer les distorsions éventuelles et de donner une grande pureté du spectre des signaux émis. Il est à noter que ce filtre, qui peut être de type passe-bas ou passe-bande, peut être réalisé de manière très simple en utilisant les techniques de filtrage à ondes de surface bien connues par l'homme de l'art.

La description suivante, faite en regard des dessins ci-annexés, le tout donné à titre d'exemples non limitatifs fera bien comprendre comment l'invention peut être réalisée. Sur les dessins :
La figure 1 montre le schéma d'un appareil conforme à l'invention,
La figure 2 montre un exemple de constellation de modulation utilisée par l'appareil de l'invention.

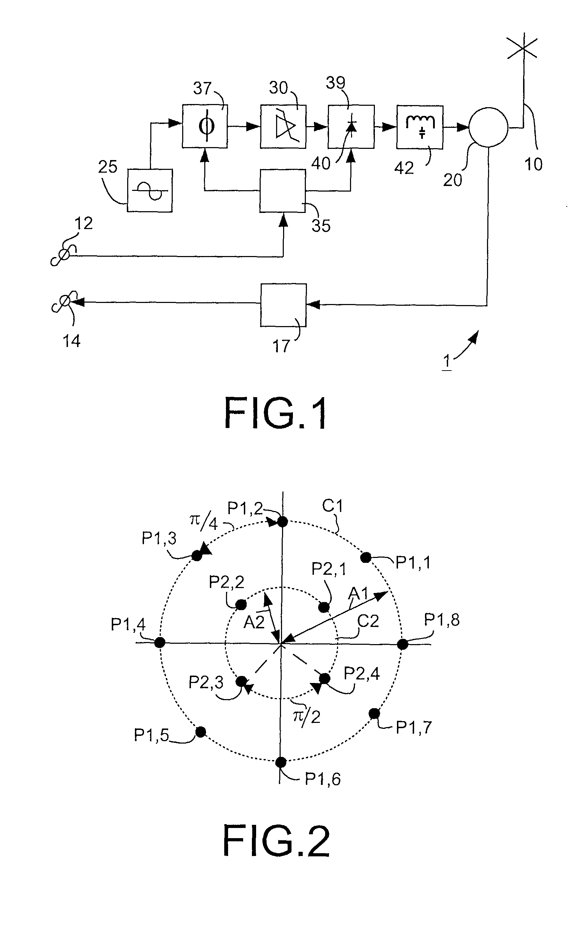

A la figure 1, on a représenté un appareil conforme à l'invention. Dans cet exemple décrit, c'est un émetteur-récepteur 1. Il comporte une antenne 10 qui est utilisée tant à l'émission qu'à la réception pour la transmission d'informations. Les informations à transmettre se présentant sous forme de données numériques sont appliquées à la borne 12 et les données reçues sont rendues disponibles à la borne 14. Ces données reçues sont élaborées par un circuit de réception 17 dont l'entrée est reliée à l'antenne 10 par l'intermédiaire d'un duplexeur d'antenne 20. Les signaux de données appliqués à l'entrée de données sont transmis au moyen d'un signal de porteuse fourni par un générateur de porteuse 25. Les signaux de porteuse sont amplifiés par un amplificateur 30 de type non linéaire, c'est-à-dire un amplificateur travaillant, par exemple en classe C, voire en classe D.

Dans le cadre de l'exemple décrit, les données sont émises en modulant en phase et en amplitude l'onde porteuse fournie à partir du générateur 25. Pour cela les données à transmettre sont appliquées, tout d'abord, à un circuit de configuration 35 qui donne pour chaque donnée ou pour chaque groupe de données une configuration phase - amplitude. On obtient ainsi une constellation, comme cela est montré sur la figure 2. Ce circuit de configuration va piloter un modulateur de phase 37 et un modulateur d'amplitude 39.

Selon l'invention le modulateur d'amplitude 39 est placé en sortie du circuit amplificateur 30, tandis que le modulateur de phase 37 est placé, de préférence, avant l'amplificateur 30 pour éviter de travailler sur des signaux de forte amplitude.

Le modulateur d'amplitude 39 est réalisé avantageusement au moyen de diodes atténuatrices connues sous le nom de diodes PIN. Sur la figure 1, on a fait figurer une telle diode PIN 40 dans le modulateur 39.

L'invention propose aussi d'utiliser un circuit de filtrage 42 de type filtre passe-bas ou passe-bande pour éliminer les résidus de spectre parasites qui peuvent survenir à la sortie du modulateur d'amplitude 39.

Il est à noter que la modulation de phase se fait d'une façon avantageuse sur des signaux de petite amplitude. L'amplificateur non linéaire n'affecte pas la modulation de phase.

La figure 2 montre un exemple de constellation de la modulation susceptible d'être utilisée. Les différents points de cette constellation sont situés sur deux cercles C1 et C2 représentés en pointillés. Sur le cercle C1, on a disposé 8 points P1,1 P1,2,..P1,8 correspondant à une même amplitude A1 de la porteuse et ils sont séparés d'une distance angulaire de π/4. Les points du cercles C2, portant les références P2,1, P2,2,...P2,4 correspondent à une amplitude A2 inférieure à A1. Leur distance angulaire est égale à π/2. Ainsi, pour passer des points du cercles C1 vers le cercle C2 et réciproquement, on agira sur le modulateur 40 qui peut être constitué, comme on l'a déjà dit, par un assemblage de diodes PIN réglable selon deux valeurs d'atténuation. Pour les différentes distances angulaires, on agira sur le modulateur de phase 37.

L'invention s'applique aux différents appareils satisfaisant aux normes EDGE (GSM) et aux normes GSM/D-AMPS.

En résumé, pour moduler des signaux de porteuse, l'invention consiste :
- en une modulation en phase de ces signaux,
- en une amplification des signaux modulés en phase, au moyen d'un amplificateur non linéaire et à haut rendement,
- en une modulation en amplitude des signaux amplifiés et
- en une fourniture des signaux modulés en amplitude à un circuit d'utilisation.

Il va de soi que l'invention couvre le cas où il n'est pas utile de moduler en phase lesdits signaux de porteuse.

## Revendications

1. Appareil comprenant un émetteur de signaux modulés en amplitude formé d'un amplificateur de type non linéaire, de préférence, pour fournir des signaux à un circuit d'utilisation à partir d'un générateur de signal de porteuse, **caractérisé en ce que** qu'il comporte, au moins, un modulateur d'amplitude qui est muni d'une entrée de modulation d'amplitude pour recevoir une information à transmettre et qui est placé entre ledit amplificateur et ledit circuit d'utilisation.

2. Appareil selon la revendication 1 comprenant un émetteur de signaux modulés en amplitude et en phase, **caractérisé en ce qu'**il comporte un modulateur de phase qui est muni d'une entrée de modulation de phase et qui est placé entre ledit générateur de signal de porteuse et ledit amplificateur.

3. Appareil selon la revendication 1 ou 2, **caractérisé en ce qu'**il comporte un circuit de filtrage situé entre le circuit d'utilisation et ledit amplificateur.

4. Appareil selon l'une des revendications 1 à 3, **caractérisé en ce que** le modulateur d'amplitude comporte des diodes de type PIN.

5. Appareil selon l'une des revendications 1 à 4, **caractérisé en ce qu'**il correspond aux normes EDGE.

6. Appareil selon l'une des revendications 1 à 4, **caractérisé en ce qu'**il correspond aux normes GSM/D-AMPS.

7. Procédé mis en oeuvre dans l'un des appareils selon l'une des revendications 1 à 6, pour moduler des signaux en amplitude, **caractérisé en ce qu'**il comporte les étapes successives suivantes :
- amplification des signaux au moyen d'un amplificateur non linéaire,
- modulation en amplitude des signaux amplifiés,
- fourniture des signaux modulés en amplitude à un circuit d'utilisation.

8. Procédé mis en oeuvre dans l'un des appareils selon l'une des revendications 1 à 6, pour moduler des signaux en amplitude, **caractérisé en ce qu'**il comporte les étapes successives suivantes :
- modulation en phase des signaux,
- amplification des signaux modulés en phase, au moyen d'un amplificateur non linéaire,
- modulation en amplitude des signaux amplifiés,
- fourniture des signaux modulés en amplitude à un circuit d'utilisation.
